# EUROPÄISCHE PATENTANMELDUNG

(11) **EP 2 511 161 A2**
(43) Veröffentlichungstag der Anmeldung: **17.10.2012**
(21) Anmeldenummer: 12161857.3
(22) Anmeldetag: 28.03.2012
(51) Int. Cl.: B62D 31/02, B62D 47/02

(54) **Eindecker-Omnibusfahrzeug**

(30) Priorität: 15.04.2011 DE 102011017257
(71) Anmelder: Eichenseher, Theo, 92342 Freystadt (DE)
(72) Erfinder: Eichenseher, Theo, 92342 Freystadt (DE)
(74) Vertreter: Graf Glück Habersack Kritzenberger

(57) **Zusammenfassung**

Die Erfindung betrifft ein Eindecker-Omnibusfahrzeug umfassend zumindest ein unteres Fahrzeugdeck (2) und ein oberes Fahrzeugdeck (3) sowie eine Vielzahl von Fahrzeugsitzen (4, 4.1, 4.2, 4.3), bei dem das untere und obere Fahrzeugdeck (2, 3) zum Ausgleich des unterschiedlichen Höhenniveaus über zumindest eine Verbindungstreppe (7) oder zumindest eine Verbindungsrampe miteinander verbunden sind. Besonders vorteilhaft sind das untere und obere Fahrzeugdeck nacheinander, entlang der Fahrzeuglängsachse angeordnet sind und das untere Fahrzeugdeck weist einen zumindest abschnittsweise ebenen Deckboden und das obere Fahrzeugdeck einen ebenen oberen Deckboden auf. Ferner sind die Fahrzeugssitze als Einzelplatzwechselsitze ausgebildet und das untere und obere Fahrzeugdeck weisen mehrere, in den unteren und/oder oberen Deckboden integrierte Aufnahmeeinrichtungen zur lösbaren Befestigung der Einzelplatzwechselsitze auf.

## Beschreibung

Die Erfindung betrifft ein Eindecker-Omnibusfahrzeug gemäß dem Oberbegriff des Patentanspruches 1.

Omnibusfahrzeuge, insbesondere Reisebusse sowie deren prinzipieller Aufbau sind hinlänglich aus dem Stand der Technik bekannt.

Insbesondere weisen bekannte Omnibusfahrzeuge zumindest einen Fahrgastraum mit mehreren Sitzplätzen auf, wobei die Sitzplätze vorzugsweise in einer Fahrzeugebene, entlang der Längsachse des Busses und in Reihen angeordnet sind. Derartige als Reisebusse konzipierte Omnibusfahrzeuge werden häufig als Eindecker-Omnibusse oder als Doppeldecker-Omnibusse ausgebildet. Bei Doppeldecker-Omnibussen sind ein unteres und oberes Fahrzeugdeck vorgesehen, welche zwei übereinander liegende Fahrgasträume ausbilden, d.h. das obere Fahrzeugdecks ist oberhalb des unteren Fahrzeugdecks angeordnet und beide Decks überlappen zumindest teilweise. Zu den Eindecker-Omnibussen zählen Normaldecker-Omnibusse, Hochdecker-Omnibusse und Superhochdecker-Omnibusse, welche sich im Wesentlichen durch Ihre Außenhöhe unterscheiden. Normaldecker-Omnibusse weisen einen Außenhöhe kleiner oder gleich 3,65 m, vorzugsweise zwischen 3,3 m und 3,65 m auf, wohingegen die Außenhöhe eines Hochdecker-Omnibusses zwischen 3,65 m und 3,80 m beträgt. Im Vergleich hierzu beträgt die Außenhöhe eines Doppeldecker-Omnibusses bis zu 4 m.

Aus der deutschen Patentschrift DE 1 221 567 B ist bereits ein Eindecker-Omnibus bekannt, der in seinem Heckteil hinter den hinteren Radachsen eine Plattform mit stufenloser Einsteigöffnung aufweist, deren Fußboden tiefer als der übrige Fußboden des Omnibusses gelegen ist.

Ferner ist aus der Druckschrift WO 03/002397 A1 ein Doppeldecker-Omnibus bekannt, welcher ein unteres und oberes Fahrzeugdeck aufweist, wobei das untere Fahrzeugdeck ebenfalls einen stufenlosen Einstieg aufweist. Um Rollstuhlfahrern und/oder älteren Personen ein erleichtertes Einsteigen in den Omnibus zu ermöglichen ist zusätzlich am stufenlosen Einstieg eine ausziehbare Rampe vorgesehen. Im unteren Fahrzeugdeck sind Mittel zur Befestigung bzw. Sicherung von Rollstühlen oder dergleichen Geräte vorgesehen. Nachteilig ist aufgrund der Doppeldecker-Ausführung die Raumhöhe des Fahrgastraumes des oberen und unteren Fahrzeugdeckes reduziert und die Anordnung der Fahrzeugsitze im Doppeldecker-Omnibus starr festgelegt.

Aufgabe der Erfindung ist es daher, ein Eindecker-Omnibusfahrzeug anzugeben, der insbesondere Rollstuhlfahrern und/oder älteren Personen ein erleichtertes Einsteigen ermöglicht. Ferner liegt der Erfindung die Aufgabe zugrunde, die Einsatzmöglichkeiten eines Eindecker-Omnibusfahrzeuges multifunktioneller zu gestalten, beispielsweise auch die Beförderung mehrerer Rollstuhlfahrer zu ermöglichen. Die Aufgabe wird ausgehend von den Merkmalen des Oberbegriffes des Patentanspruches 1 und 6 durch jeweils dessen kennzeichnende Merkmale gelöst.

Der wesentliche Aspekt des erfindungsgemäßen Eindecker-Omnibusfahrzeuges ist darin zu sehen, dass das untere und obere Fahrzeugdeck nacheinander, entlang der Fahrzeuglängsachse angeordnet sind, dass das untere Fahrzeugdeck einen zumindest abschnittsweise ebenen Deckboden und das obere Fahrzeugdeck einen ebenen oberen Deckboden aufweist, und dass die Fahrzeugssitze als Einzelplatzwechselsitze ausgebildet sind und das untere und obere Fahrzeugdeck mehrere, in den unteren und/oder oberen Deckboden integrierte Aufnahmeeinrichtungen zur lösbaren Befestigung der Einzelplatzwechselsitze aufweisen. Das erfindungsgemäße Einzelplatzwechselsitzsystem ermöglicht in Kombination mit der Ausgestaltung des unteren Fahrzeugdecks als Niederflur- Fahrzeugdeck eine variable Innenraumgestaltung des Eindecker-Omnibusfahrzeuges, welche ein erleichtertes Zusteigen von behinderten oder älteren Fahrgästen ermöglicht. Durch die Vielzahl an vorzugsweise rasterartig angeordneten, in den Deckboden integrierte Aufnahmeeinrichtungen kann schnell und einfach eine anwendungsspezifische Ausstattung des Omnibusses mit Einzelplatzwechselsitzen und/oder Tischen vorgenommen werden, welche jeweils über ein einheitliches Befestigungssystem im unteren bzw. oberen Deckboden des Eindecker-Omnibusfahrzeuges lösbar fixiert werden. Ohne Einzelplatzwechselsitze und/oder Tische die Fahrzeugdecks individuell nutzbare ebene Freiflächen aus. Durch das neue Sitzplatzsystem können damit besonders vorteilhaft variable Sitzreihen wie beispielsweise Vierer-, Dreier- oder Zweier-Reihen gebildet werden und/oder Freiflächen für Buffet oder Ausstellungsbereiche sowie Stauräume für Behindertenfahrzeuge, insbesondere Rollstühle oder Gehhilfen erzeugt werden. Dies ermöglicht neben der herkömmlichen Nutzung des Eindecker-Omnibusfahrzeuges, insbesondere Reisebusses auch eine senioren- bzw. behindertengerechte Anordnung der Fahrzeugsitze, beispielsweise mit einer erhöhten Durchgangsbreite.

Weiterhin vorteilhaft sind die zur lösbaren Befestigung der Wechselsitze vorgesehenen Aufnahmeeinrichtungen durch eine Vielzahl von hülsenartigen Bodenausnehmungen gebildet, welche vorzugsweise in Form von Bodenbaugruppen im oberen und unteren Deckboden des jeweiligen Fahrzeugdecks integriert sind. Beispielsweise sind die hülsenartigen Bodenausnehmungen entlang mehrerer, parallel zur Fahrzeuglängsachse verlaufenden Längsreihen und/oder entlang von senkrecht zur Fahrzeuglängsachse verlaufenden Querreihen angeordnet, und zwar beabstandet zueinander.

Ein weiterer Aspekt der Erfindung betrifft ein Wechselsitzsystem, welches einen Wechselsitz, insbesondere Einzelplatzwechselsitz und eine zugehörige hülsenartige Aufnahmeeinrichtung umfasst. Hierbei weist der Wechselsitz zumindest einen Sitzfuß auf, der über eine Verstellmechanik mit einer Sitzplatte mit darauf angeordnetem Sitzpolster verbunden ist. Der Sitzfuß besitzt einen konischen zulaufenden Befestigungsabschnitt gefolgt von einem ebenfalls konisch zulaufenden Halteabschnitt, wobei der Befestigungsabschnitt sich in Richtung der vertikalen Sitzlängsachse zum freien Ende des Sitzfuß und der Halteabschnitt in Richtung der vertikalen Sitzlängsachse zur Sitzplatte hin verjüngt. Auch besitzt der Sitzfuß im Übergangsbereich zwischen dem Befestigungsabschnitt und dem Halteabschnitt einen nach außen abstehenden Befestigungsflanschabschnitt. Die hülsenartige Bodenausnehmung umfasst einen Hülsenabschnitt, in dem zwei bolzenartige Querstreben senkrecht zur Längsachse der Bodenausnehmung verlaufend und beabstandet zueinander angeordnet sind, wobei zur lagerichtigen Positionierung des Wechselsitzes in der hülsenartigen Bodenausnehmung der Befestigungsabschnitt an seiner freien Stirnseite zwei parallel zueinander und senkrecht zur vertikalen Sitzlängsachse verlaufende längliche Führungsausnehmungen aufweist, welche zur Aufnahme der Querstreben ausgebildet sind. Die in der Bodengruppe eingebauten hülsenartigen Bodenausnehmung können auch zur Aufnahme weiterer Einrichtungsgegenstände wie Tische oder dergl. Gegenstände Verwendung finden. Auch können die bolzenartigen Querstreben zur Transportsicherung von Gegenständen im Businnenraum eingesetzt werden.

Weiterhin vorteilhaft ist zur Verriegelung des Sitzfußes in der hülsenartigen Bodenausnehmung ein Sicherungsstab vorgesehen, der durch eine entlang der vertikalen Sitzlängsachse verlaufende Durchgangsbohrung geführt ist und an dessen unteren freien Ende ein quer zur vertikalen Sitzlängsachse verlaufender Sicherungsbolzen vorgesehen ist. Der Sicherungsstab ist an seinem dem Sicherungsbolzen gegenüberliegenden freienden Ende mit einem Betätigungshebel verbunden ist, über welchen der Sicherungsstab mit dem Sicherungsbolzen um die vertikale Sitzlängsachse von einer Verriegelungsposition in eine Öffnungsposition schwenkbar. Ferner ist die Verstellmechanik zur Verschiebung und Arretierung der Sitzplatte entlang der Sitzquerachse in unterschiedlichen Rastpositionen ausgebildet. Das Wechselsitzsystem bietet die Möglichkeit, jeden Fahrgastplatz einzeln mit einem Handgriff durch das Fachpersonal zu entfernen und somit Platz für Gehhilfen, Rollstuhl usw. zu schaffen. Außerdem kann die Sitzposition eines Wechselsitzes einfach und problemlos entgegen der Fahrtrichtung gewechselt werden, so dass Sitzgruppen erzeugt werden können.

Weiterhin vorteilhaft weist der Wechselsitz eine abnehmbare und/oder klappbare Armlehne auf, d.h. die auswechselbare Armlehne kann sowohl als links als auch als rechts wirkende Armlehne verwendet werden. Der Wechselsitz ist damit für eine Vielzahl von Bestuhlungsvarianten in Fahrzeugen, insbesondere in einem Omnibusfahrzeug verwendbar.

Aufgrund der dadurch erreichbaren Vielfalt der Sitzmöglichkeiten in einem auf Höhenversatz aufgebauten Omnibusfahrzeug lassen sich bei ausreichenden Fahrgastraumhöhen in beiden Decks Fahrzeuge für die Personenbeförderung bauen, die bei hochwertiger Ausstattung den Komfort für die Fernreise ebenso gerecht werden, wie beim Einsatz beim sogenannten Überlandverkehr. Neben dem Einsatz für spezielle Ereignisse wie beispielsweise Ausstellungs- oder Infomobile kann das erfindungsgemäß multifunktionale Eindecker-Omnibusfahrzeug auch bei Hilfsorganisationen, beispielsweise Polizei, Feuerwehr, Technisches Hilfswerk, etc. Verwendung finden. Zudem ergeben sich Weiterbildungen, Vorteile und Anwendungsmöglichkeiten der Neuerung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Neuerung, unabhängig von ihrer Zusammenfassung in den Ansprüchen oder deren Rückbeziehung. Auch wird der Inhalt der Ansprüche zu einem Bestandteil der Beschreibung gemacht. Es zeigen:

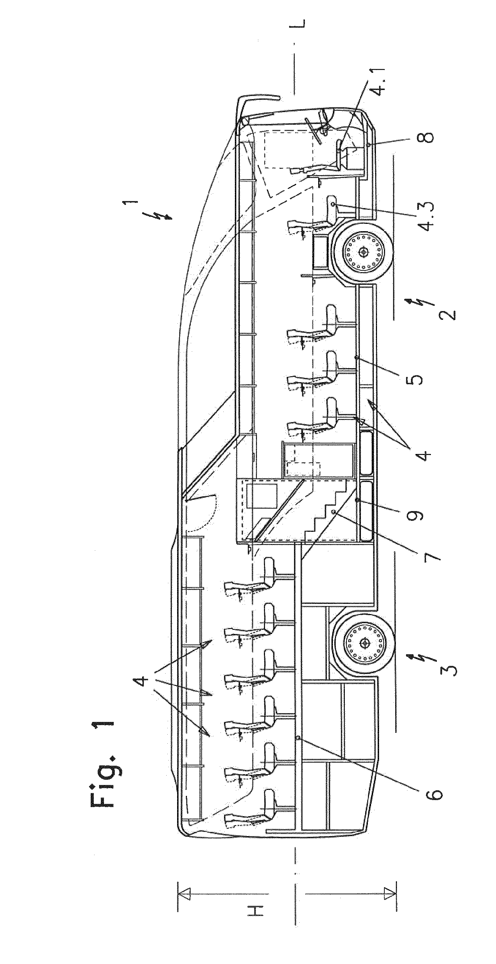

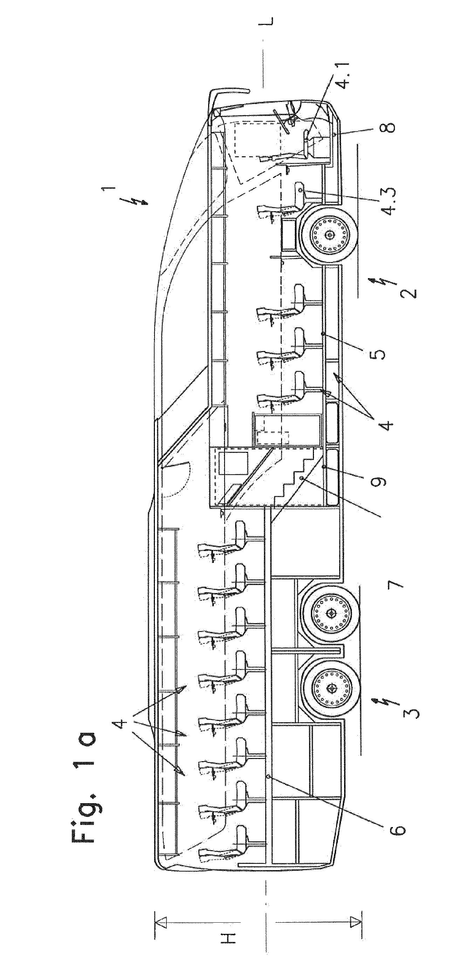

- Fig. 1: beispielhaft eine schematische Schnittzeichnung eines erfindungsgemäßen Eindecker-Omnibusfahrzeuges mit bestuhlten oberen und unteren Fahrzeugdeck mit zwei Radachsen,
- Fig. 1 a: beispielhaft eine schematische Schnittzeichnung eines erfindungsgemäßen Eindecker-Omnibusfahrzeuges mit bestuhlten oberen und unteren Fahrzeugdeck mit drei Radachsen,
- Fig. 2: beispielhaft eine schematische Schnittzeichnung eines erfindungsgemäßen Eindecker-Omnibusfahrzeuges in einer alternativen Ausführungsform mit bestuhlten oberen Fahrzeugdeck,
- Fig. 3: beispielhaft eine Draufsicht auf das obere und untere Fahrzeugdeck des Eindecker-Omnibusfahrzeuges ohne Wechselsitze,
- Fig. 4: beispielhaft eine Draufsicht auf das obere und untere Fahrzeugdeck des Eindecker-Omnibusfahrzeuges mit Wechselsitzen,
- Fig. 5: beispielhaft eine Seitenansicht des erfindungsgemäßen Wechselsitzsystems,
- Fig. 6: beispielhaft eine Draufsicht auf eine hülsenartige Bodenausnehmung,

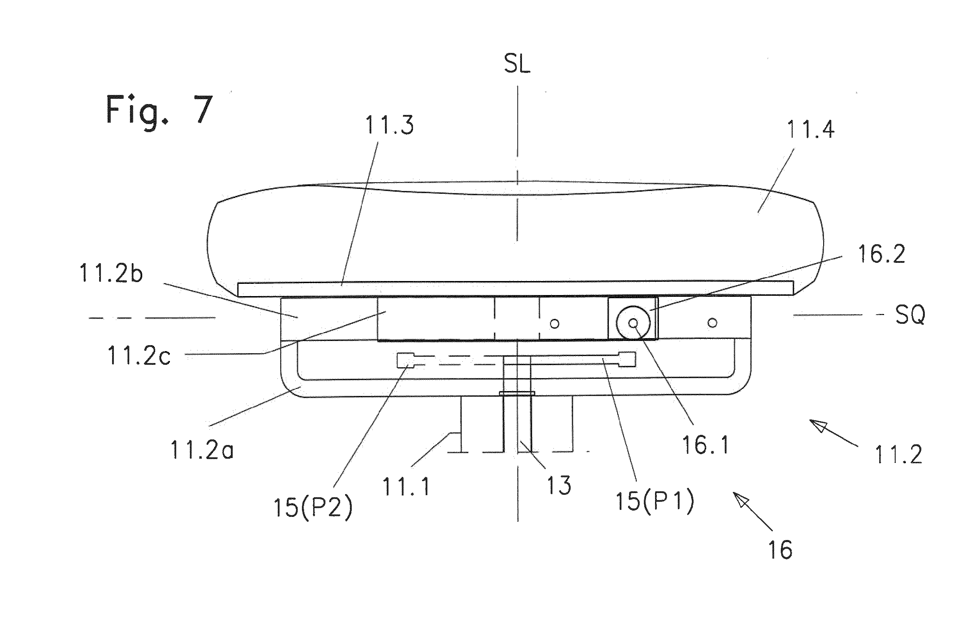

- Fig. 7: beispielhaft eine stirnseitige Ansicht des Sitzkissens mit Unterbau eines Wechselsitzes,

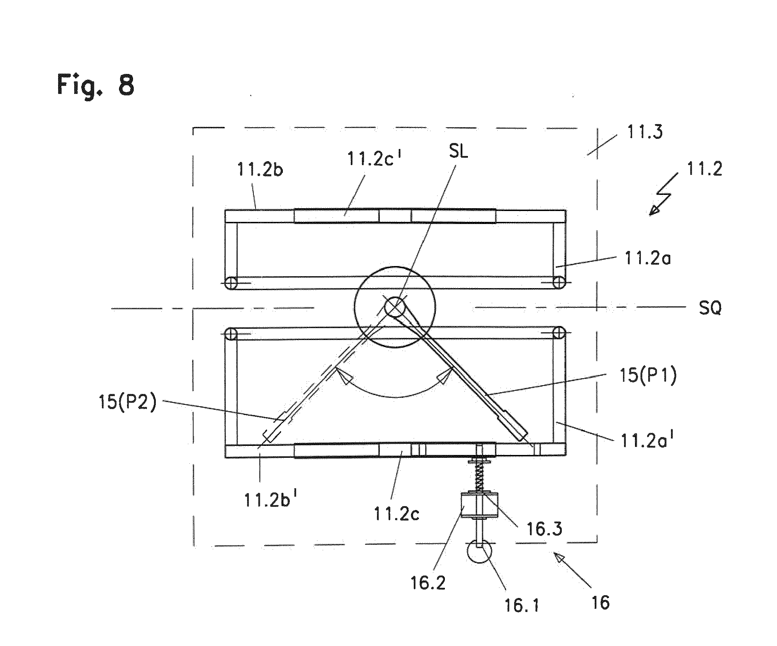

- Fig. 8: beispielhaft eine Draufsicht auf den Unterbau eines Wechselsitzes ohne Sitzkissen,
- Fig. 9: beispielhaft eine Seitenansicht eines Wechselsitzes mit verstellbarer Armlehne,
- Fig. 10: beispielhaft eine Seitenansicht des Wechselsitzes gemäß Figur 9 mit eingeklappter Armlehne,

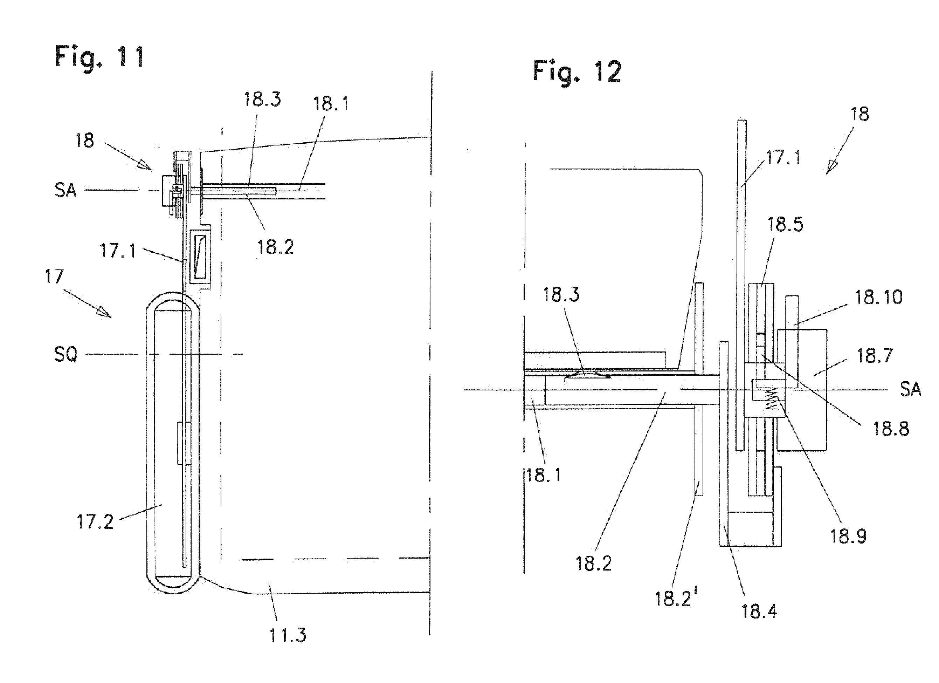

- Fig. 11: beispielhaft eine Draufsicht auf den Wechselsitz gemäß Figur 10,
- Fig. 12: beispielhaft einen schematischen Schnitt durch ein Rohr-in-Rohr-Stecksystem drehgelenkigen Anbindung der Armlehne am Wechselsitz und
- Fig. 13a-j: beispielhaft jeweils in Draufsicht auf den unteren und oberen Deckenboden mit unterschiedliche Bestuhlungsvarianten des erfindungsgemäßen Eindecker-Omnibusfahrzeuges.

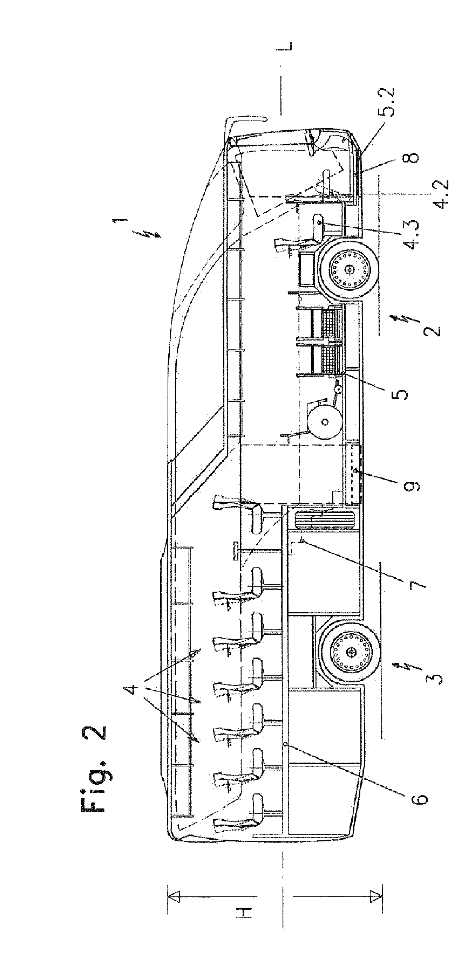

In den Figuren 1 und 2 ist ein erfindungsgemäßes Eindecker-Omnibusfahrzeug 1, insbesondere ein Reiseomnibus in einer schematischen Schnittzeichnung dargestellt. Das Eindecker-Omnibusfahrzeug bzw. Omnibusfahrzeug 1 kann beispielsweise in Form eines Hochdecker-Omnibusses mit einer Außenhöhe H zwischen 3,65 m und 3,80 m realisiert sein.

Das Eindecker-Omnibusfahrzeug 1 umfasst zumindest ein unteres Fahrzeugdeck 2 und ein oberes Fahrzeugdeck 3 sowie eine Vielzahl von Fahrzeugsitzen 4, wobei das untere Fahrzeugdeck 2 einen zumindest abschnittsweise ebenen unteren Deckboden 5 und das obere Fahrzeugdeck einen ebenen oberen Deckboden 6 aufweist, die auf unterschiedlichen Höhenniveaus angeordnet sind. So weist beispielsweise der untere Deckboden 5 des unteren Fahrzeugdecks 2 näherungsweise das Höhenniveau des Fahrzeugdecks eines Niederflur-Omnibusses auf. Aufgrund dieser bodennahen Ausbildung des untere Deckboden 5 weist dieser in den Innenraum hinragende Radkästenabdeckungen auf, welche den zur Bestuhlung des unteren Deckbodens 5 verfügbaren Raum begrenzen.

Der Abstand der Oberkante des unteren Fahrzeugdecks 2 bzw. des unteren Deckbodens 5 zur Fahrbahn kann beispielsweise zwischen 0,40 m und 0,70 m, vorzugsweise zwischen 0,60 m und 0,70 m betragen. Das obere Fahrzeugdeck 3 bzw. der obere Deckboden 6 weisen einen deutlich größeren Abstand zur Fahrbahn auf, und zwar zwischen 1,50 m und 1,80 m.

Zum Ausgleich des unterschiedlichen Höhenniveaus ist zur Verbindung des unteren und oberen Fahrzeugdecks 2, 3 bzw. des unteren Deckbodens 5 mit dem oberen Deckboden 6 eine Verbindungstreppe 7 vorgesehen, welche vorzugsweise mehrere Stufen umfasst. Alternativ zur Verbindungstreppe 7 kann zum Ausgleich des unterschiedlichen Höhenniveaus eine Verbindungsrampe (nicht in den Figuren dargestellt) Verwendung finden.

Das untere Fahrzeugdeck 2 und das obere Fahrzeugdeck 3 sind erfindungsgemäß entlang der Fahrzeuglängsachse L des Eindecker-Omnibusfahrzeuges 1 angeordnet, wobei das untere Fahrzeugdeck 2 näherungsweise den vorderen Abschnitt des Eindecker-Omnibusfahrzeuges 1 und das obere Fahrzeugdeck 3 den hinteren Abschnitt des Eindecker-Omnibusfahrzeuges 1 bildet. Damit ergibt sich eine stufenartiger Verlauf des zur Aufnahme der Fahrgäste vorgesehen Fahrgastraumes auf zwei Ebenen mit unterschiedlichen Höhenniveau.

Das untere Fahrzeugdeck 2 weist ferner zumindest einen ersten stufenlosen Einstieg 8 auf, der im vorderen Abschnitt des Eindecker-Omnibusfahrzeuges 1, und zwar auf der von oben betrachtet rechten Längsseite des Eindecker-Omnibusfahrzeuges 1 vorgesehen ist. Dieser stufenlose, seitliche Einstieg 8 kann beispielsweise eine vergrößerte Einstiegsbreite, vorzugsweise größer 1,00 m aufweisen, wodurch dieser ein erleichtertes Einsteigen in das Eindecker-Omnibusfahrzeuges 1, insbesondere von älteren Personen und Behinderten, auch Rollstuhlfahrern ermöglicht. Ferner der untere Deckboden 5 im vorderen Einstiegsbereich einen rampenartigen Zuführungsabschnitt 5.1 auf, der sich vom ersten stufenlosen Einstieg 8 zunächst in Richtung des Busfahrers und nach eine Linkskrümmung entlang der Fahrzeuglängsachse L sich fortsetzt. Damit wird ein noch komfortabler Zugang des unteren Deckbodens 5 durch die Fahrgäste, insbesondere Rollstuhlfahrer oder ältere Personen erreicht.

Um das Besteigen des Eindecker-Omnibusfahrzeuges 1 für Rollstuhlfahrer über den ersten stufenlosen Einstieg 8 zusätzlich zu erleichtern kann eine ausziehbare Rampe 5.2 im Bodenbereich unterhalb des stufenlosen Einstiegs 8 vorgesehen sein, welche vorzugsweise manuell ausziehbar ausgebildet ist.

Zusätzlich kann ein zweiter Einstieg 9 vorgesehen sein, welcher aufgrund der Höhenerstreckung des Bodenaufbaus des unteren Deckbodens 5 zumindest eine oder zwei Zugangsstufen aufweist, um ausgehend von der Fahrbahn das Höhenniveau des unteren Fahrzeugdecks 2 bzw. des unteren Deckbodens 5 zu erreichen. Der Bodenaufbau ist zur Bereitstellung von elektrischen und/oder mechanischen Installationen des Eindecker-Omnibusfahrzeuges 1 erforderlich. Der zweite Einstieg 9 ist an dem dem oberen Fahrzeugdeck 3 benachbarten Ende des unteren Fahrzeugdecks 2 angeordnet, und zwar vor der Verbindungstreppe 7, so dass nach dem Besteigen des Eindecker-Omnibusfahrzeuges 1 über den zweiten Einstieg 9 das obere Fahrzeugdeck 3 direkt über die Verbindungstreppe 7 erreichbar ist.

Erfindungsgemäß sind die Fahrzeugsitze 4 des Eindecker-Omnibusfahrzeuges 1 als Wechselsitze 11, insbesondere Einzelplatzwechselsitz ausgebildet, zu deren lösbaren Befestigung im unteren und/oder oberen Fahrzeugdeck 2, 3 bzw. auf dem unteren und/oder oberen Deckboden 5, 6 mehrere Aufnahmeeinrichtungen 10 vorgesehen sind, wobei vorzugsweise eine Aufnahmeeinrichtungen 10 jeweils zur Aufnahme eines Wechselsitzes 11 ausgebildet ist. Auch kann im Bereich des Überganges zwischen dem unteren und/oder oberen Fahrzeugdeck 2, 3 ein Fahrgast-WC und/oder eine Miniküche im Eindecker-Omnibusfahrzeug 1 vorgesehen sein. Besonders bevorzugst ist das Fahrgast-WC auf der dem zweiten Einstieg 9 gegenüberliegenden Seite des Eindecker-Omnibusfahrzeuges 1 vorgesehen und der Boden des Fahrgast-WC's geht barrierefrei in den unteren Deckboden 5 über so dass das Fahrgast-WC auch von älteren Personen und/oder Rollstuhlfahrern problemlos vom unteren Fahrzeugdeck 2 aus benutzt werden kann.

Die zur lösbaren Befestigung der Wechselsitze 11 vorgesehenen Aufnahmeeinrichtungen 10 sind durch eine Vielzahl von hülsenartigen Bodenausnehmungen 10 gebildet, welche vorzugsweise in Form einer Bodenbaugruppe in den unteren und/oder oberen Deckboden 5, 6 integriert sind. Besonders bevorzugt schließen die hülsenartigen Bodenausnehmungen 10 hierbei bündig mit der Oberkante des unteren und/oder oberen Deckbodens 5, 6 ab, so dass sich der Hülsenabschnitt 10.1 der hülsenartigen Bodenausnehmungen 10 in den unteren und/oder oberen Deckboden 5, 6 erstreckt.

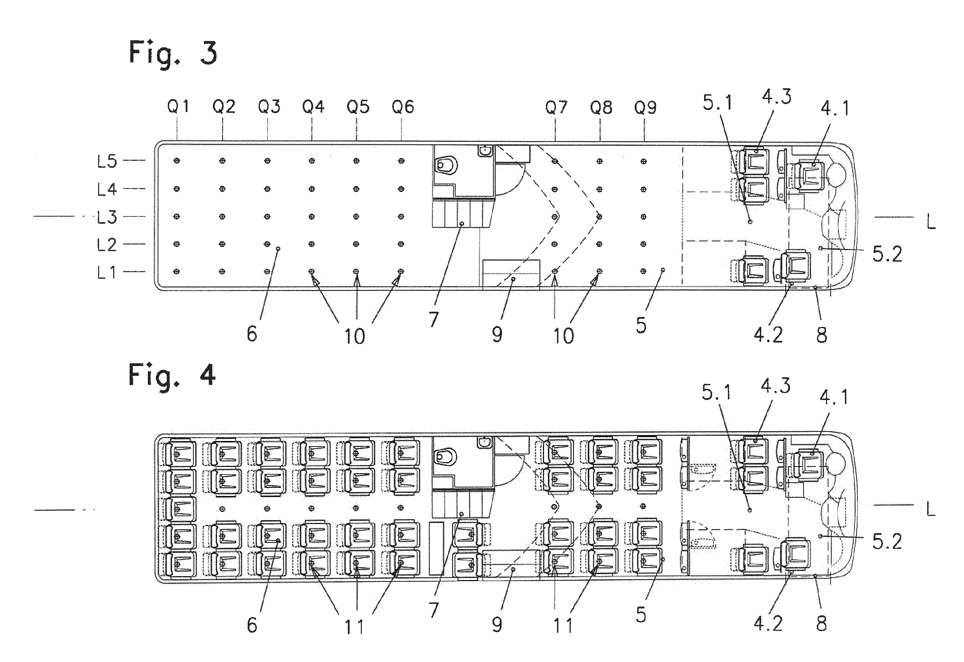

In Figur 3 ist beispielhaft eine Draufsicht auf den unteren und oberen Deckboden 5, 6 des Eindecker-Omnibusfahrzeuges 1 dargestellt, und zwar ohne die als Wechselsitze 11 ausgebildeten Fahrzeugsitze 4. Die Aufnahmeeinrichtungen, insbesondere hülsenartigen Bodenausnehmungen 10 sind hierbei beispielsweise entlang mehrerer, parallel zur Fahrzeuglängsachse L verlaufenden Längsreihen L1 bis L5 und/oder entlang von senkrecht zur Fahrzeuglängsachse L verlaufenden Querreihen Q1 bis Q9 angeordnet. Hierdurch ergibt sich beispielhaft eine matrixartige Verteilung der hülsenartigen Bodenausnehmungen 10 im unteren und oberen Deckboden 5, 6. Es sind allerdings beliebige rasterartige Anordnungen der Aufnahmeeinrichtungen, insbesondere hülsenartigen Bodenausnehmungen 10 auf dem unteren und oberen Deckboden 5, 6 ohne den erfindungsgemäßen Gedanken zu verlassen.

Im dargestellten Ausführungsbeispiel sind die hülsenartigen Bodenausnehmungen 10 entlang einer ersten bis fünften Längsreihe L1 bis L5 und im oberen Deckboden 6 entlang einer ersten bis sechsten Querreihe Q1 bis Q6 sowie im unteren Deckboden 7 entlang einer siebten bis neunten Querreihe Q7 bis Q9 angeordnet, und zwar jeweils in den Schnittpunkten der genannten Längsreihen L1 bis L5 und Querreihen Q1 bis Q9. Somit ergeben sich in Summe 45 hülsenartige Bodenausnehmungen 10, in welchen jeweils ein Wechselsitz 11 lösbar befestigbar ist.

Figur 4 zeigt beispielhaft eine Draufsicht auf den unteren und oberen Deckboden 5, 6 des Eindecker-Omnibusfahrzeuges 1 mit montierten Wechselsitzen 11, wobei auf dem oberen Deckboden 6 entlang der dritten Längsreihe L3 zusammenfällt, mit Ausnahme der ersten Querreihe Q1 keine Wechselsitze 4 montiert sind, um einen zentralen Durchgang im oberen Deckboden 6 entlang der Fahrzeuglängsachse L zu schaffen.

Analog hierzu sind im unteren Deckboden 5 entlang der dritten Längsreihe L3 ebenfalls keine Wechselsitze 11 montiert, wohingegen in den an den Schnittstellen der siebten bis neunten Querreihen Q7 bis Q9 mit der ersten und zweiten sowie vierten und fünften Längsreihe L1, L2, L4, L5 vorgesehenen hülsenartigen Bodenausnehmungen 10 Wechselsitze 11 aufgenommen sind. Damit setzt sich der zentrale Durchgang über die Verbindungstreppe 7 im unteren Fahrzeugdeck 2 fort.

Zusätzlich zu den Wechselsitzen 11 können auch einzelne Fahrzeugsitze des Eindecker-Omnibusfahrzeuges 1 fest montiert sein. Beispielsweise weist das Eindecker-Omnibusfahrzeug 1 einen Fahrersitz 4.1 und einen Beifahrersitz 4.2 auf, welche jeweils fest montiert sind. Die sich daran anschließen Sitze der ersten Sitzreihe 4.3 können ebenfalls fest montiert oder als Wechselsitze 11 ausgebildet sein. Vorzugsweise sind jeweils hinter dem Fahrersitz 4.1 und Beifahrersitz 4.2 jeweils ein Fahrgastsitz vorgesehen. Auch kann die erste Sitzreihe 4.3 drei Fahrgastsitze umfassen, wobei vorzugsweise zumindest der hinter dem Fahrersitz 4.1 angeordnete und in den rampenartigen Zuführungsabschnitt 5.1 hineinragende Fahrgastsitz als Wechselsitz ausgebildet ist.

In einer bevorzugten Ausführungsform ist der Beifahrersitz 4.2 zur Vergrößerung der Einstiegsbreite als Klappsitz ausgebildet. Auch können im Anschluss an die erste Fahrzeugsitzreihe 4.3 Ablageflächen oder Staufächer vorgesehen sein, welche auf den über den unteren Deckenboden 5 nach oben wegstehenden Radkästenabdeckungen montiert sind.

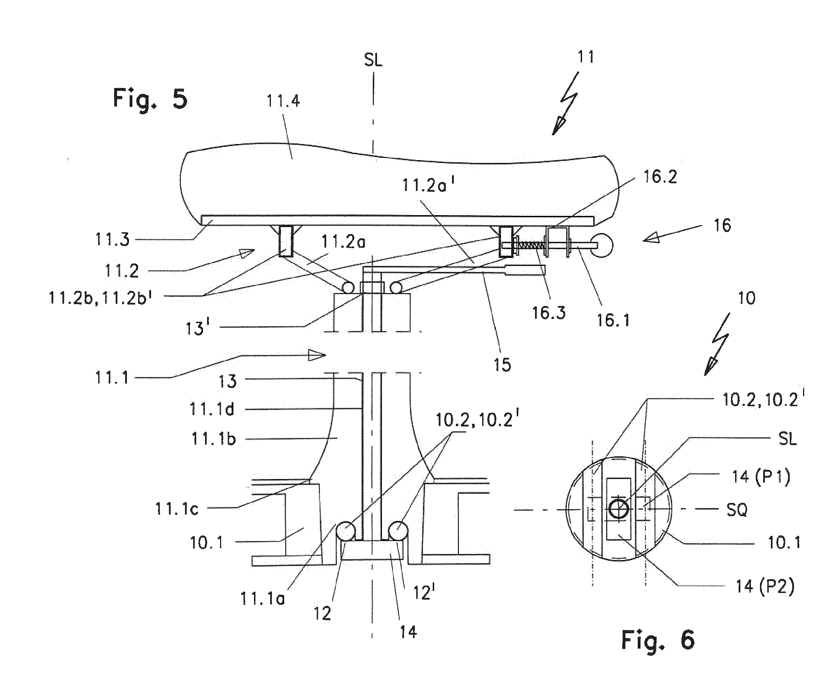

In Figur 5 ist in einer schematischen Seitenansicht der prinzipielle Aufbau eines erfindungsgemäßen Wechselsitzes 11 und in Figur 5 eine schematische Ansicht der offenen Unterseite der hülsenartigen Bodenausnehmung 10 dargestellt.

Ein Wechselsitz 11, insbesondere bei Ausbildung in Form eines Einzelplatzwechselsitzes besteht im Wesentlichen aus einem Sitzfuß 11.1, der über eine Verstellmechanik 11.2 mit einer Sitzplatte 11.3 mit darauf angeordneten Sitzpolster 11.4 verbunden ist. Es versteht sich, dass ein Wechselsitz 11 auch eine Rückenlehne aufweist, welche jedoch in den weiteren Figuren nicht näher erläutert wird. Der Sitzfuß 11.1 weist an seinem dem Sitzpolster 11.4 gegenüber liegenden freien Ende einen konischen zulaufenden Befestigungsabschnitt 11.1 a auf, an dem sich ein ebenfalls konisch zulaufender Halteabschnitt 11.1 b anschließt, welcher sich vorzugsweise in Richtung der Sitzplatte 11.3, d.h. entlang der vertikalen Sitzlängsachse SL verjüngt. Aufgrund der konischen Ausführung des Befestigungsabschnittes 11.1 a und des Halteabschnittes 11.1 b entsteht im Übergangsbereich zwischen dem Befestigungsabschnitt 11.1 a und dem Halteabschnitt 11.1 b ein nach außen abstehender Befestigungsflanschabschnitt 11.1 c, mit dem sich der Sitzfuß 11.1 auf dem oberen Rand der hülsenartigen Bodenausnehmung 10 abstützt und damit ein zu tiefes Eintauchen des Sitzfußes 11.1 in die hülsenartige Bodenausnehmung 10 verhindert.

Die hülsenartige Bodenausnehmung 10 ist in Form einer Bodenbaugruppe in dem jeweiligen Deckboden 5, 6 integriert. Diese weist einen sich konisch nach unten verjüngenden Hülsenabschnitt 10.1 auf. Hierbei sind der Hülsenabschnitt 10.1 und der Befestigungsabschnitt 11.1a des Sitzfußes 11.1 derart geformt, dass beim Einführen des Befestigungsabschnittes 11.1a in den Hülsenabschnitt 10.1 eine formschlüssige Verbindung entsteht.

In einer bevorzugten Ausführungsvariante weist die hülsenartige Bodenausnehmung 10 zwei bolzenartige Querstreben 10.2, 10.2' auf, die senkrecht zur Längsachse der Bodenausnehmung 10 verlaufen und beabstandet zueinander angeordnet sind. Die Querstreben 10.2, 10.2' sind vorzugsweise als Rundbolzen realisiert, welche als Vollprofile ausgebildet sind und fest im Hülsenabschnitt 10.1 der Bodenbaugruppe verankert sind. Zur lagerichtigen Positionierung des Wechselsitzes 11 in der hülsenartigen Bodenausnehmung 10 weist der Befestigungsabschnitt 11.1 a an seiner freien Stirnseite zwei parallel zueinander und senkrecht zur vertikalen Sitzlängsachse SL verlaufende längliche Führungsausnehmungen 12, 12' auf, welche zur Aufnahme der Querstreben 10.2, 10.2' beim Einführen des Befestigungsabschnittes 11.1 a in die hülsenartige Bodenausnehmung 10 ausgebildet sind. Damit ist sichergestellt, dass jeweils die Vorderseite der Sitzplatte 11.3 bzw. des Sitzpolsters 11.4 parallel zu den Querreihen Q1 bis Q9 bzw. senkrecht zu den Längsreihen L1 bis L5 verläuft und damit eine lagerichtige Anordnung des Wechselsitzes 11 sichergestellt ist, und zwar mit Blickrichtung in oder gegen Fahrtrichtung.

Bei Entfernen des Wechselsitzes 11 aus der hülsenartigen Bodenausnehmung 10 kann diese bodengleich und damit stolperfrei mit einer Abdeckhülse verschlossen werden. Auch können im Bedarfsfall die Querstreben 10.2, 10.2' der hülsenartigen Bodenausnehmung 10 zur Aufnahme von Verzurreinrichtungen verwendet werden. Zur Verriegelung des Sitzfußes 11.1 in der hülsenartigen Bodenausnehmung 10 ist ferner ein Sicherungsstab 13 vorgesehen, der durch eine entlang der vertikalen Sitzlängsachse SL verlaufende Durchgangsbohrung 11.1d geführt ist und an dessen unteren freien Ende ein quer zur vertikalen Sitzlängsachse SL verlaufender Sicherungsbolzen 14 vorgesehen ist. Damit bilden der Sicherungsstab 13 und der Sicherungsbolzen 14 ein T-förmiges Sicherungselement aus. Hierbei ist der Sicherungsbolzen 14 derart dimensioniert, dass durch den von den beiden Querstreben 10.2, 10.2' eingeschlossenen Freiraum durchführbar ist und ein Drehen des Sicherungsbolzen 14 um die vertikalen Sitzlängsachse SL innerhalb des Hülsenabschnittes 10.1 unterhalb der Querstreben 10.2, 10.2' möglich ist. Der Sicherungsstab 13 ist an seinem oberen Ende mittels einem Sicherungsring 13' vor einen Herausfallen gesichert.

Der Sicherungsstab 13 ist an seinem dem Sicherungsbolzen 14 gegenüberliegenden freienden Ende mit einem Betätigungshebel 15 verbunden, über welchen der Sicherungsstab 13 mit dem Sicherungsbolzen 14 um die vertikale Sitzlängsachse SL drehbar ist. Durch Schwenken des Betätigungshebels 15 um beispielsweise einen Winkel von 90° wird der Sicherungsbolzen 14 von einer Verriegelungsposition P1 in eine Öffnungsposition P2 geschwenkt, wobei der Sicherungsbolzen 14 in der Verriegelungsposition P1 quer zu den Querstreben 10.2, 10.2' verläuft und damit ein Herausziehen des Sitzfußes 11.1 aus dem Hülsenabschnitt 10.1 verhindert. In der Öffnungsposition P2 verläuft der Sicherungsbolzen 14 parallel zu den Querstreben 10.2, 10.2', wird damit von diesen freigegeben und kann über den von den Querstreben 10.2, 10.2' eingeschlossenen Freiraum nach oben entfernt werden. In Figur 6 ist beispielhaft die offene Unterseite des Hülsenabschnittes 10.1 mit dem darin aufgenommen Sicherungsbolzen 14 dargestellt, und zwar in der Öffnungsposition P2. Die Verriegelungsposition P1 des Sicherungsbolzens 14 ist mittels einer strichliert gezeichneten Linie angedeutet.

Die Verstellmechanik 11.2 ist zur Befestigung der Sitzplatte 11.3 am oberen freien Ende des Sitzfußes 11.1 und weist hierzu zwei vorzugsweise U-förmige Befestigungsstreben 11.2a, 11.2a' mit jeweils einem Verbindungsabschnitt und zwei links und rechts daran anschließenden Schenkelabschnitten auf. Die freien Enden der Schenkelabschnitte der beiden Befestigungsstreben 11.2a, 11.2a' weisen jeweils nach außen und die parallel zueinander angeordneten Verbindungsabschnitte sind fest mit der oberen Stirnseite des Sitzfußes 11.1 verbunden.

Die freien Enden der Schenkelabschnitte einer Befestigungsstrebe 11.2a, 11.2a' sind mit einem Rechteckprofilelement 11.2b, 11.2b' verbunden, welches in zumindest einem einen rechteckförmigen Querschnitt aufweisenden Führungshohlprofil 11.2c, 11.2c' geführt sind, das jeweils an der Unterseite der Sitzplatte 11.3 befestigt ist. Zur Führung eines Rechteckprofilelements 11.2b, 11.2b' können vorzugsweise zwei Führungshohlprofile 11.2c, 11.2c' vorgesehen sein. Damit ist über die Verstellmechanik 11.2 ein seitliches Verschieben der Sitzplatte 11.3 senkrecht zur vertikalen Sitzlängsachse SL bzw. entlang der Sitzquerachse SQ, im montierten Zustand entlang bzw. parallel zu der jeweiligen Querreihe Q1 bis Q9 möglich.

Über einen an der Unterseite der Sitzplatte 11.3 angeordnete Verriegelungsmechanik 16 ist eine Fixierung des im vorderen Führungshohlprofil 11.2c, 11.2c' aufgenommen Rechteckprofilelements 11.2b, 11.2b' in einer vorgegeben Halteposition möglich. In einer bevorzugten Ausführungsform ist ein bolzenartiger Schiebehebel 16.1 vorgesehen, der durch zwei Öffnungen eines U-Profilelementes 16.2 geführt ist und über eine Druckfeder 16.3 vorgespannt ist. Die Druckfeder 16.3 ist hierbei zwischen dem U-Profilelement 16.2 und einer fest mit dem bolzenartigen Schiebehebel 16.1 Spannscheibe aufgenommen. Das über die Spannscheibe hinausragende freie Ende des bolzenartiger Schiebehebels 16.1 ist durch eine gemeinsame Durchgangsbohrung des Führungshohlprofil 11.2c und des Rechteckprofilelements 11.2b geführt und verriegelt damit genannte Profile. Zur Arretierung der Sitzplatte 11.3 in unterschiedlichen Positionen sind mehrere Durchgangsbohrungen im Rechteckprofilelements 11.2b vorgesehen. Über die beschriebene Verstellmechanik 11.2 kann der Abstand der Sitzpolster 11.4 von zwei benachbarten Wechselsitzen 11 variiert werden, und zwar trotz des durch die hülsenartigen Bodenausnehmung 10 vorgegebenen Montagerasters.

In einer weiteren Ausführungsvariante ist an der Sitzplatte 11.3 eine wechselbare Armlehne 17 vorgesehen, welche klappbar ausgebildet ist. Die Armlehne 17 besteht im Wesentlichen aus einem Stützelement 17.1 und einer mit diesem gelenkig verbundenen Armauflage 17.2. Das der Armauflage 17.2 gegenüberliegende freie Ende des Stützelementes 17.1 ist mittels eines Rohr-in-Rohr-Stecksystem 18 mit einer Blattfedersicherung schwenkbar um eine senkrecht zur vertikalen Sitzlängsachse SL verlaufende Schwenkachse SA an der Unterseite der Sitzplatte 11.3 befestigt.

Das Rohr-in-Rohr-Stecksystem 18 weist hierzu ein im hinteren freien Randbereich der Sitzplatte 11.3 befestigtes Führungshülse 18.1 vorgesehen, in der ein Steckbolzen 18.2 geführt ist. Der Steckbolzen 18.2 und die Führungshülse 18.1 weisen gegenüberliegende Ausnehmungen 18.3 auf, in der eine Blattfeder zumindest teilweise aufgenommen ist und in die gegenüberliegende Ausnehmung eingreift. Diese Blattfedersicherung ist zum Lösen bei horizontaler Beanspruchung nach Überwinden einer bestimmten Vorspannkraft herausziehbar, was jedoch in der Regel nur vom Fahrer durchgeführt wird. Um ein zu weites Einstecken des Steckbolzens 18.2 in die Führungshülse 18.1 zu verhindern, weist der Steckbolzen 18.2 einen vorzugsweise umlaufenden Einsteckanschlag 18.2' auf

Die Armauflage 17.1 und das Stützelement 17.2 sind im Wesentlichen zwei, in sich verschiebbare Teile, welche ein Verschwenken der Armauflage 17.1 ermöglichen.

Am äußeren freien Ende des Steckbolzen 18.2 ist hierzu ein Haltearm 18.4 vorgesehen, welcher eine Zahnscheibe 18.5 trägt, die über einen Verbindungsabschnitt 18.6 mit Drehknopf 18.7 mit dem freien Ende der Armauflage 17.1 verbunden ist. Der Verbindungsabschnitt 18.6 ist zur Führung eines Verriegelungszahnes 18.8 vorgesehen, der über eine Druckfeder 18.9 gegen die Zahnscheibe 18.5 vorgespannt ist. Im Drehknopf 18.7 ist ein Sicherungsknopf 18.10 vorgesehen, mittels dem ein Ausklinken des Verriegelungszahnes 18.8 aus der Zahnscheibe 18.5 möglich ist. Das Stützelement 17.1 ist um die Schwenkachse SA um ca. 180° schwenkbar, so dass die Armlehne 17 beidseitig verwendbar ist.

Die Armauflage 17.2 weist zwei nach unten abstehende Anschlussflansche auf, die eine Führung für das dem Rohr-in-Rohr-Stecksystem 18 gegenüber liegende freie Ende des Stützelementes 17.1. Zwischen den beiden Anschlussflanschen ist ein Haltebolzen vorgesehen, der in einem im Stützelement 17.1 vorgesehene Langloch aufgenommen ist und über einen federbelasteten Bolzen in einer waagrechten Halteposition arretierbar ist.

Die wechselbaren Armlehnen 17 sind damit sowohl als links als auch als rechts wirkende Armlehnen 17 verwendbar. Hierzu ist die Armauflage 17.2 jeweils in eine waagrechte Position bringbar, wobei die Dreh- oder Kippbewegung der Armlehne 17 beim Einsatz von links nach rechts entgegengesetzt zueinander ausgeführt ist.

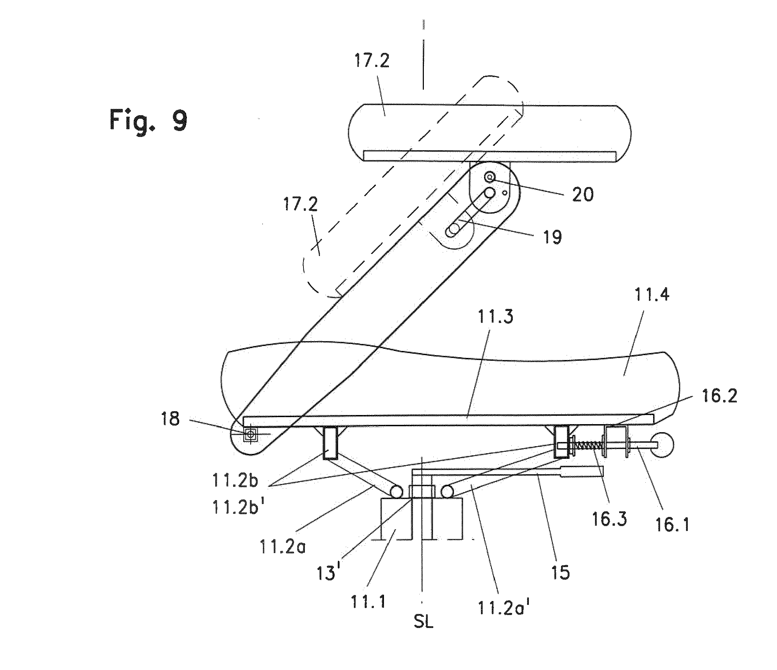

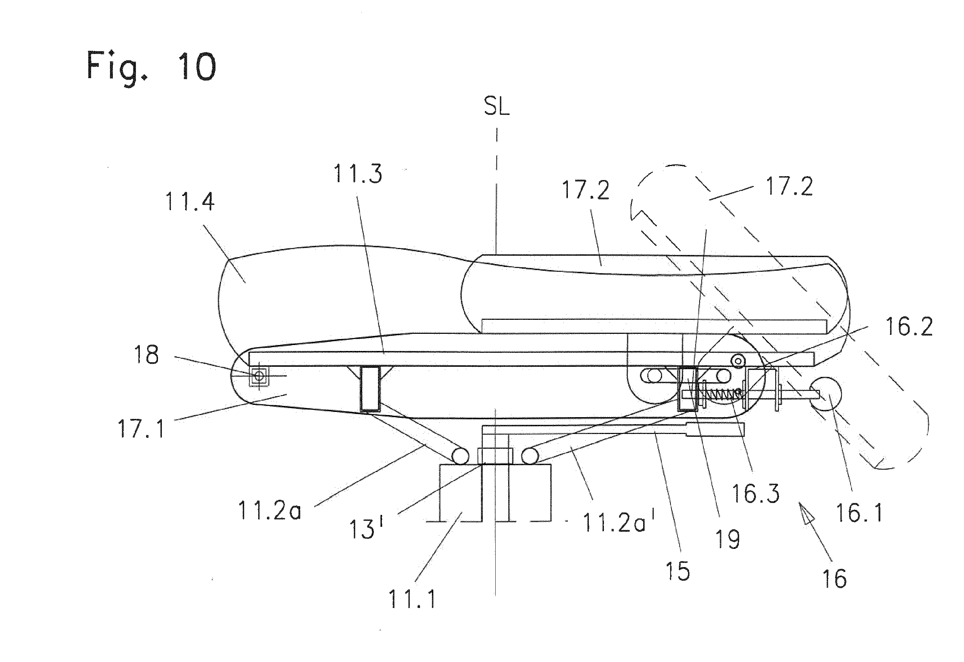

Vorzugsweise ist das Stützelement 17.1 als Flachprofil ausgebildet, welches starr über die beschriebene Umlenkkonstruktion in der Achse einer Arretiervorrichtung mit beispielsweise 15° Teilung an dem Einsteckprofil befestigt ist und aus der waagrechten Position seitlich am Wechselsitz 11 durch eine Drehung des Drehknopfes 18.7 um ca. 45° angehoben wird. Dabei rastet die Armlehne in gewünschten Positionen ein und ist gegen ungewolltes Abkippen gesichert. Die dabei ebenfalls auf 45° angehobene Armauflage 17.2 wird durch Ausschieben in einem Stützelement 17.1 geführten Langloch 19 weiter nach oben gezogen und nach einer Drehbewegung in die Waagrechte mittels eines Federbolzens 20 gegen Kippen gesichert. Durch ein Überkippen über die Längsachse der Armlehne 17.2 kann die Armauflage 17.2 auf die andere Seite gebracht werden und die Armlehnen 17.2 mit den gleichen Funktionen auf der gegenüberliegenden Sitzseite verwendet werden. Um die Armlehne 17.2 wieder herabzulassen, wird der Federbolzen 20 der Armauflage 17.2 entsichert, die Armauflage zurückgeschoben und nach Zurückdrehen des Drehkopfes 18.7 in die Ausgangsposition an der Sitzseite auf Höhe des Sitzpolsters 11.4 gebracht. Die beschrieben Gebrauchsstellungen der Armlehne 17 sind in den Figuren 9 und 10 beispielhaft dargestellt.

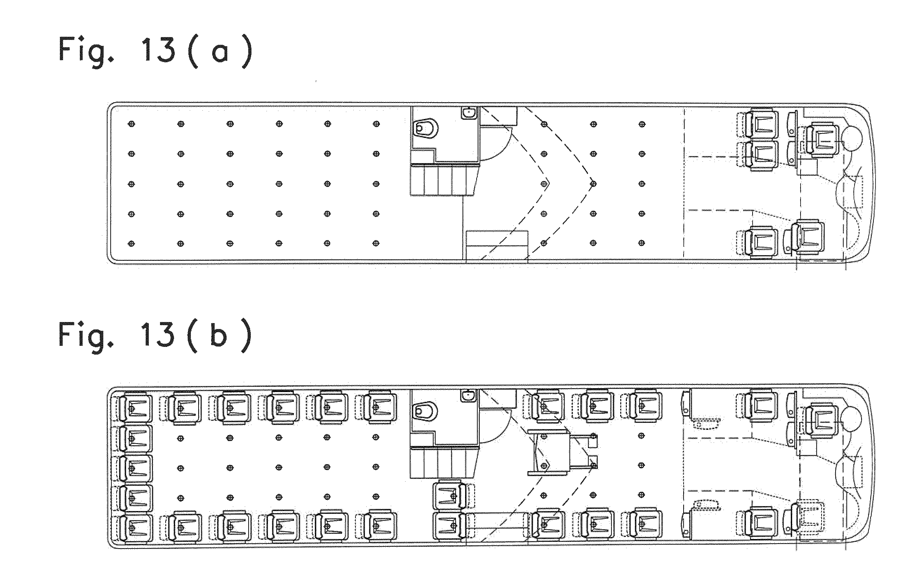

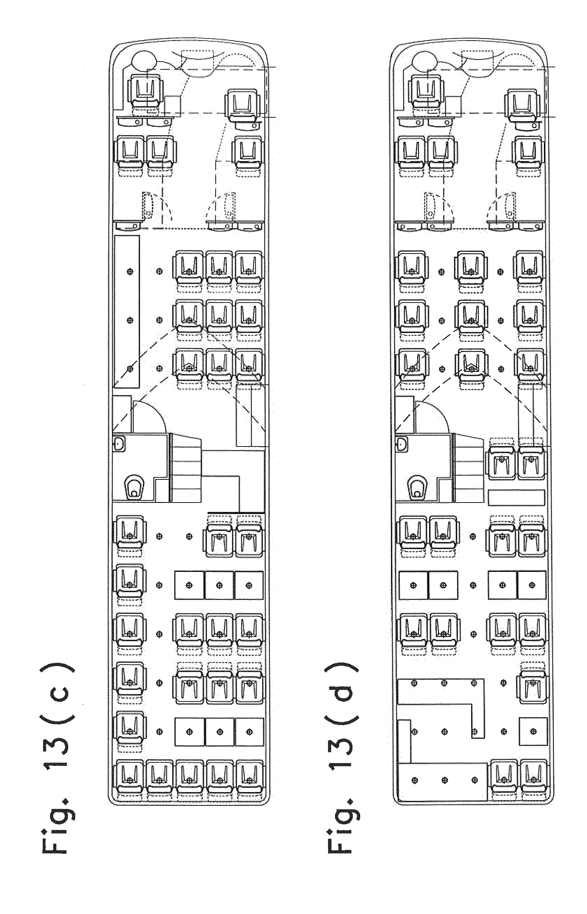

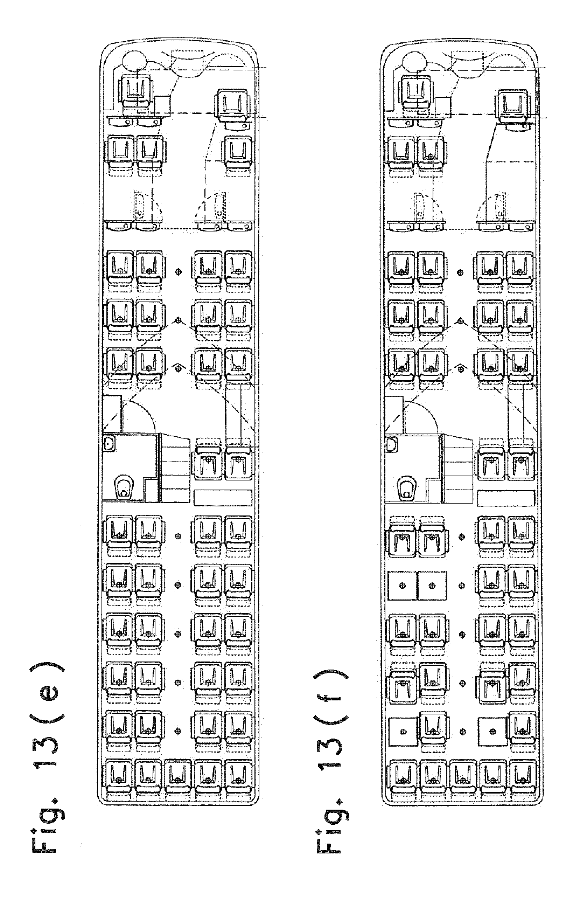

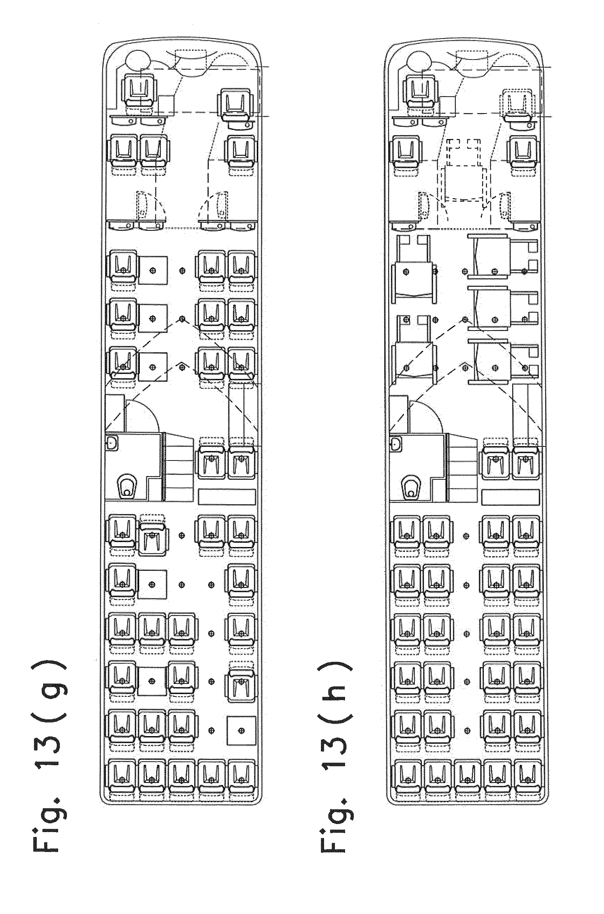

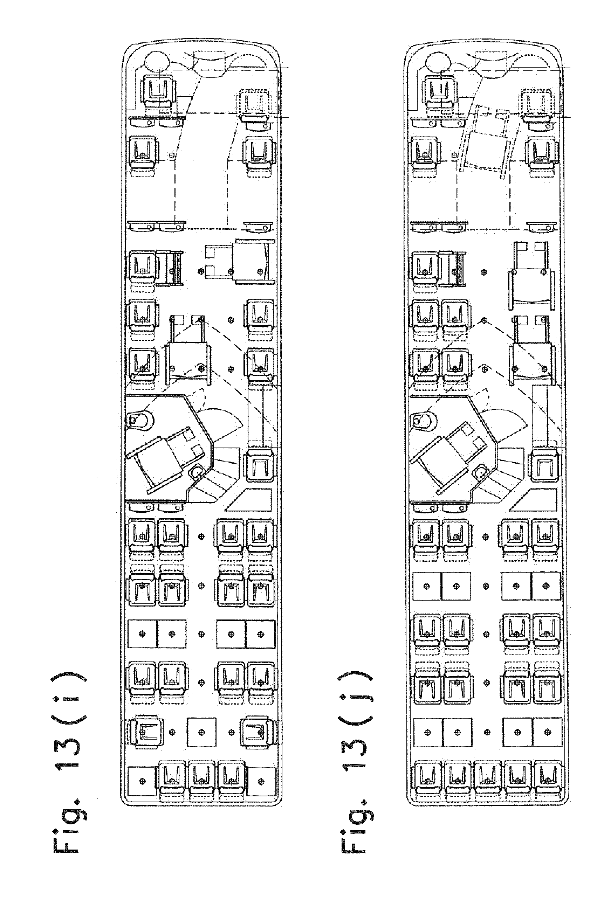

In den Figuren 13 (a) bis (j) sind unterschiedliche Varianten der Bestuhlung des Eindecker-Omnibusfahrzeuges 1 dargestellt, welche die multifunktionale Nutzung aufgrund des erfindungsgemäßen Sitzwechselsystems aufzeigen. Diese zeigen den bereits in den Figuren 3 und 4 vergrößert dargestellten Innenaufbau des Eindecker-Omnibusfahrzeuges 1.

Figur 13 (a) zeigt hierbei nochmals eine Draufsicht auf den unbestuhlten unteren und oberen Deckboden 5, 6 des erfindungsgemäßen Eindecker-Omnibusfahrzeuges 1.

In Figur 13 (b) ist eine Ausführungsvariante mit einer äußeren Bestuhlung für den Einsatz als Linienbus dargestellt, wobei zwischen der äußeren Bestuhlung Raum für Stehplätze gebildet ist und hierzu obere Haltergriffe (nicht in den Figuren dargestellt) vorgesehen werden.

Figur 13 (c) bis (j) zeigen diverse unterschiedliche Bestückungsvarianten, beispielsweise mit zwischen zwei Sitzreihen angeordneten Tischen und/oder seitlich neben den Wechselsitzen vorgesehen Beistelltischen und/oder einem hinteren Thekenbereich und/oder einem behindertengerechten Fahrgast-WC. Auch kann die Ausrichtung der Wechselsitze 11 in oder gegen die Fahrrichtung erfolgen bzw. nebeneinander angeordnete Wechselsitze 11 gegenläufig zueinander angeordnet sein, um die Kommunikation zwischen den Fahrgästen zu erleichtern.

Die Motoreinheit des Eindecker-Omnibusfahrzeuges 1 ist im hinteren Abschnitt des oberen Fahrzeugdecks 3 eingebaut. Der Einbau erfolgt entweder stehend oder liegend, so dass zusätzliche Staumöglichkeiten unterhalb des oberen Fahrzeugdecks 3 entstehen, welche vorteilhaft von der von der Fahrbahn abgewandten Seite zugänglich sind.

Die Erfindung wurde voranstehend an einem Ausführungsbeispiel beschrieben. Es versteht sich, dass zahlreiche Modifikationen und Änderungen der Erfindung, insbesondere der in den Figuren 13 (b) bis (g) dargestellten Bestuhlungsvarianten möglich sind, ohne dass hierdurch der Erfindungsgedanke verlassen wird.

### Bezugszeichenliste

- 1: Eindecker-Omnibusfahrzeug
- 2: unteres Fahrzeugdeck
- 3: oberes Fahrzeugdeck
- 4: Fahrzeugsitze
- 4.1: Fahrersitz
- 4.2: Beifahrersitz
- 4.3: erste Sitzreihe
- 5: unter Deckboden
- 5.1: rampenartige Zuführungsabschnitt
- 5.2: ausziehbare Rampe
- 6: oberer Deckboden
- 7: Verbindungstreppe
- 8: erster Einstieg
- 9: zweiter Einstieg
- 10: Aufnahmevorrichtung bzw. hülsenartige Bodenausnehmung
- 10.1: Hülsenabschnitt
- 10.2, 10.2': Querstreben
- 11: Wechselsitz
- 11.1: Sitzfuß
- 11.1a: Befestigungsabschnitt
- 11.1b: Halteabschnitt
- 11.1c: Befestigungsflanschabschnitt
- 11.1d: Durchgangsbohrung
- 11.2: Verstellmechanik
- 11.3: Sitzplatte
- 11.4: Sitzpolster
- 12, 12': Führungsausnehmungen
- 13: Sicherungsstab
- 13': Sicherungsring
- 14: Sicherungsbolzen
- 15: Betätigungshebel
- 16: Verriegelungsmechanik
- 17: Armlehne
- 17.1: Stützelement
- 17.2: Armauflage
- 18: Rohr-in-Rohr-Stecksystem
- 18.1: Führungshülse
- 18.2: Steckbolzen
- 18.2': Einsteckanschlag
- 18.3: Ausnehmung
- 18.4: Haltearm
- 18.5: Zahnscheibe
- 18.6: Verbindungsabschnitt
- 18.7: Drehknopf
- 18.8: Veriegelungszahn
- 18.9: Druckfeder
- 18.10: Sicherungsknopf
- 19: Langloch

- L: Fahrzeuglängsachse
- L1 - L5: erste bis fünfte Längsreihe
- Q1 - Q9: erste bis neunte Querreihe
- SA: Schwenkachse
- SL: vertikale Sitzlängsachse
- SQ: Sitzquerachse
- H: Außenhöhe
- P1: Verriegelungsposition
- P2: Öffnungsposition

## Patentansprüche

1. Eindecker-Omnibusfahrzeug umfassend zumindest ein unteres Fahrzeugdeck (2) und ein oberes Fahrzeugdeck (3) sowie eine Vielzahl von Fahrzeugsitzen (4, 4.1, 4.2, 4.3), bei dem das untere und obere Fahrzeugdeck (2, 3) zum Ausgleich des unterschiedlichen Höhenniveaus über zumindest eine Verbindungstreppe (7) oder zumindest eine Verbindungsrampe miteinander verbunden sind, wobei das untere Fahrzeugdeck (2) zumindest einen stufenlosen Einstieg (8) aufweist, **dadurch gekennzeichnet, dass** das untere und obere Fahrzeugdeck (2, 3) nacheinander, entlang der Fahrzeuglängsachse (L) angeordnet sind, dass das untere Fahrzeugdeck (2) einen zumindest abschnittsweise ebenen Deckboden (5) und das obere Fahrzeugdeck (3) einen ebenen oberen Deckboden (6) aufweist, und dass die Fahrzeugssitze (4) als Einzelplatzwechselsitze (11)ausgebildet sind und das untere und obere Fahrzeugdeck (2, 3) mehrere, in den unteren und/oder oberen Deckboden (5, 6) integrierte Aufnahmeeinrichtungen (10) zur lösbaren Befestigung der Einzelplatzwechselsitze (11) aufweisen.

2. Eindecker-Omnibusfahrzeug nach Anspruch 1, **dadurch gekennzeichnet, dass** die zur lösbaren Befestigung der Einzelplatzwechselsitze (11) vorgesehenen Aufnahmeeinrichtungen durch eine Vielzahl von hülsenartigen Bodenausnehmungen (10) gebildet sind.

3. Eindecker-Omnibusfahrzeug nach Anspruch 2, **dadurch gekennzeichnet, dass** die hülsenartigen Bodenausnehmungen in Form von Bodenbaugruppen im unteren und/oder oberen Deckboden (5, 6) integriert sind.

4. Eindecker-Omnibusfahrzeug nach einem der Ansprüche 1 bis 3, **dadurch gekennzeichnet, dass** die Aufnahmeeinrichtungen, insbesondere hülsenartigen Bodenausnehmungen (10) entlang mehrerer, parallel zur Fahrzeuglängsachse (L) verlaufenden Längsreihen (L1 bis L5) und/oder entlang von senkrecht zur Fahrzeuglängsachse (L) verlaufenden Querreihen (Q1 bis Q9) angeordnet sind und/oder beabstandet zueinander angeordnet sind.

5. Eindecker-Omnibusfahrzeug nach einem der Ansprüche 1 bis 4, **dadurch gekennzeichnet, dass** neben den Einzelplatzwechselsitze (11) fest montierte Fahrzeugsitze (4), insbesondere ein Fahrersitz (4.1) und ein vorzugsweise umklappbarer Beifahrersitz (4.2) vorgesehen sind.

6. Wechselsitzsystem, insbesondere zur Verwendung in einem Eindecker-Omnibusfahrzeug nach einem der Ansprüche 1 bis 6, **gekennzeichnet durch** einen Einzelplatzwechselsitz (11) und eine zugehörige hülsenartige Aufnahmeeinrichtung (10), wobei der Einzelplatzwechselsitz (11) zumindest einen Sitzfuß (11.1) aufweist, der über eine Verstellmechanik (11.2) mit einer Sitzplatte (11.3) mit einem darauf angeordneten Sitzpolster (11.4) verbunden ist und die hülsenartige Aufnahmeeinrichtung (10) in einem Fahrzeug, insbesondere Eindecker-Omnibusfahrzeug (1) fest verbaut ist, insbesondere als hülsenartige Bodenausnehmung (10) ausgebildet ist.

7. Wechselsitzsystem nach Anspruch 6, **dadurch gekennzeichnet, dass** der Sitzfuß (11.1) einen konischen zulaufenden Befestigungsabschnitt (11.1a) gefolgt von einem ebenfalls konisch zulaufenden Halteabschnitt (11.1 b) aufweist, wobei der Befestigungsabschnitt (11.1 a) sich in Richtung der vertikalen Sitzlängsachse (SL) zum freien Ende des Sitzfuß (11.1) und der Halteabschnitt (11.1b) in Richtung der vertikalen Sitzlängsachse (SL) zur Sitzplatte (11.3) hin verjüngt.

8. Wechselsitzsystem nach Anspruch 6 oder 7, **dadurch gekennzeichnet, dass** der Sitzfuß (11.1) im Übergangsbereich zwischen dem Befestigungsabschnitt (11.1 a) und dem Halteabschnitt (11.1 b) einen nach außen abstehenden Befestigungsflanschabschnitt (11.1c) aufweist.

9. Wechselsitzsystem nach einem der Ansprüche 6 bis 8, **dadurch gekennzeichnet, dass** die hülsenartige Bodenausnehmung (10) einen Hülsenabschnitt (10.1) aufweist, in dem zwei bolzenartige Querstreben (10.2, 10.2') senkrecht zur Längsachse der Bodenausnehmung (10) verlaufend und beabstandet zueinander angeordnet sind.

10. Wechselsitzsystem nach Anspruch 9, **dadurch gekennzeichnet, dass** zur lagerichtigen Positionierung des Einzelplatzwechselsitzes (11) in der hülsenartigen Bodenausnehmung (10) der Befestigungsabschnitt (11.1 a) an seiner freien Stirnseite zwei parallel zueinander und senkrecht zur vertikalen Sitzlängsachse (SL) verlaufende längliche Führungsausnehmungen (12, 12') vorgesehen sind, welche zur Aufnahme der Querstreben (10.2, 10.2') ausgebildet sind.

11. Wechselsitzsystem nach einem der Ansprüche 6 bis 10, **dadurch gekennzeichnet, dass** zur Verriegelung des Sitzfußes (11.1) in der hülsenartigen Bodenausnehmung (10) ein Sicherungsstab (13) vorgesehen, der durch eine entlang der vertikalen Sitzlängsachse (SL) verlaufende Durchgangsbohrung (11.1 d) geführt ist und an dessen unterem freien Ende ein quer zur vertikalen Sitzlängsachse (SL) verlaufender Sicherungsbolzen (14) vorgesehen ist.

12. Wechselsitzsystem nach Anspruch 11, **dadurch gekennzeichnet, dass** der Sicherungsstab (13) an seinem dem Sicherungsbolzen (14) gegenüberliegenden freienden Ende mit einem Betätigungshebel (15) verbunden ist, über welchen der Sicherungsstab (13) mit dem Sicherungsbolzen (14) um die vertikale Sitzlängsachse (SL) von einer Verriegelungsposition (P1) in eine Öffnungsposition (P2) schwenkbar ist.

13. Wechselsitzsystem nach einem der Ansprüche 6 bis 12, **dadurch gekennzeichnet, dass** die Verstellmechanik (11.2) zur Verschiebung und Arretierung der Sitzplatte (11.3) entlang der Sitzquerachse (SQ) in unterschiedlichen Rastpositionen ausgebildet ist.

14. Wechselsitzsystem nach einem der Ansprüche 1 bis 13, **dadurch gekennzeichnet, dass** der Einzelplatzwechselsitz (11) eine abnehmbare und/oder klappbare Armlehne (17) aufweist.
